# EUROPÄISCHE PATENTANMELDUNG

(11) **EP 2 988 385 A1**
(43) Veröffentlichungstag der Anmeldung: **24.02.2016**
(21) Anmeldenummer: 14181293.3
(22) Anmeldetag: 18.08.2014
(51) Int. Cl.: H02H 3/02, H01H 79/00, H02J 3/18, H02H 7/10

(54) **Schutzsystem für leistungselektronisches Durchgangssystem mit Bypass**

(71) Anmelder: "Condensator Dominit" Dr. Christian Dresel Gesellschaft für Leistungselektronik, Energietechnik und Netzqualität mbH, 59929 Brilon (DE)
(72) Erfinder: Grosze-Gehring, Martin, 34508 Willingen (DE); Zolog, Monica, Dr., 59939 Olsberg (DE); Post, Hans-Gerd, Dr., 59929 Brilon (DE); Dresel, Christian, Dr., 59929 Brilon (DE)
(74) Vertreter: Götz, Georg Alois

(57) **Zusammenfassung**

Verfahren zum Schutz eines leistungselektronischen Durchgangssystems, beispielsweise eines DVR (Dynamic Voltage Restorer), vor Überlastung durch einen fehlerhaften, irregulären und/oder unnormalen Überlast- und/oder Kurzschlussstrom, wobei das Durchgangssystem seriell zwischen wenigstens zwei Elektroenergiesystemen jeweils mit einer oder mehrere Energiequellen und/oder einer oder mehreren Energiesenken eingefügt ist, und im Fall des Überlast- oder Kurzschlussstroms ein oder mehrere erste Bypass-Schaltmittel aktiviert werden, die zum Umgehen und/oder Überbrücken des Durchgangssystems, beispielsweise über dessen Eingang und dessen Ausgang, ausgebildet und angeordnet sind, wobei bei Überschreiten einer vorbestimmten Schwelle für den Überlast- und/oder Kurzschlussstrom ein oder mehrere zweite Bypass-Schaltmittel höherer Strombelastbarkeit und/oder höherer Schaltgeschwindigkeit als diejenigen des oder der ersten Bypass-Schaltmittel aktiviert werden, wobei der Überlast- und/oder Kurzschlussstrom über die geschlossenen, zweiten Bypass-Schaltmittel weiter geführt wird, und das oder die zweiten Bypass-Schaltmittel ebenfalls zum Umgehen und/oder Überbrücken des Durchgangssystems, beispielsweise über dessen Eingang und dessen Ausgang, ausgebildet und angeordnet werden.

## Beschreibung

Die Erfindung betrifft ein Verfahren und eine Anordnung oder Einrichtung zum Schutz eines leistungselektronischen Durchgangssystems vor Überlastung durch einen fehlerhaften, irregulären und/oder unnormalen Überlast- und/oder Kurzschlussstrom gemäß jeweiligem Oberbegriff (ersten Teil) der nebengeordneten bzw. unabhängigen Patentansprüche 1 und 7. Die darin genannten Elektroenergiesysteme sind dabei jeweils mit einer oder mehreren Energiequellen und/oder mit einer oder mehreren Energiesenken ausgeführt und können insbesondere Netzbereiche zur Stromversorgung oder dergleichen sein.

In Anlagen zur Übertragung und Verteilung elektrischer Energie werden leistungselektronische Durchgangssysteme eingesetzt, um die Versorgungssicherheit mit elektrischer Energie abzusichern (unterbrechungsfreie Stromversorgung - USV), die Spannungsqualität zu beeinflussen (aktive Serienfilter, dynamische Spannungsregler, DVR - Dynamic Voltage Restorer), oder um den Lastfluss in elektrischen Netzen zu beeinflussen (Längsregler, Unified Power Flow Controller - UPFC). Bei DVR, AVC (Active Voltage Conditioner) und aktiven Spannungsreglern geht es darum, Spannungseinbrüche (Voltage Sags) oder Spannungsüberhöhungen (Voltage Dips) auszuregeln, um hauptsächlich, aber nicht ausschließlich industrielle Verbraucher zu schützen, da USV-Anlagen aufgrund der teuren Energiespeicher nicht wirtschaftlich eingesetzt werden können.

Insbesondere sind leistungselektronische Durchgangssysteme in Form von DVR (Dynamic Voltage Restorer) bekannt (Ankit Pandey, Rajlakshmi "Dynamic Voltage Restorer and its Application at LV and MV Level", International Journal of Scientific & Engineering Research, Volume 4, Issue 6, June-2013 ISSN 2229-5518; Oguz Gülcin, "Performance of a Dynamic Voltage Restorer for a Practical Situation",Masterarbeit The Graduate School of Natural and Applied Sciences of Middle East Technical University, December 2004). DVR ist eine leistungselektronische Einrichtung zur Beibehaltung oder Wiederherstellung der Spannungsversorgung einer elektrischen Last, falls die Spannungsversorgung durch Spannungseinbrüche oder Spannungsüberhöhungen gestört ist. Dazu wird der DVR zwischen einer Energiequelle und einer Energiesenke in Serie angeordnet. Die Hauptfunktion besteht darin, mittels eines Injektionstransformators oder Serientransformators die zur Kompensation notwendige Spannung in Reihe zur Spannungsquelle zum Verbraucher hin immer dann zur Verfügung zu stellen (zu injizieren), wenn ein Spannungseinbruch oder eine Spannungsüberhöhung detektiert wird.

Allgemein kennzeichnend für die Durchgangssysteme ist ihre Anordnung in Reihe zu den Betriebsmitteln der elektrischen Energieverteilung zum Zwecke der Beeinflussung der elektrischen Spannung. Dabei erfolgt ein Stromfluss durch Leistungshalbleiter (z. B. Dioden, Thyristoren, Transistoren oder IGBTs), welcher im Wesentlichen durch die umgebenden Erzeuger- und Verbraucheranlagen bestimmt ist. Die dabei eingesetzten Leistungshalbleiter sind nur sehr begrenzt überlastbar Der Stromfluss zwischen Elektroenergiesystemen, z.B. zwischen einer Energiequelle und einer Energiesenke, kann auch über einen Injektions- oder Serientransformator in den Stromkreis der Leistungshalbleiter gekoppelt werden.

Bei Übertragungs- und Verteilnetzen bis hin zu Verbrauchereinrichtungen ist es bekannt, selektive Überstromschutzeinrichtungen zu verwenden, die bei Überlastung oder Kurzschluss ansprechen und Sicherheitsmaßnahmen auslösen. Solche Schutzeinrichtungen bzw. Überlasterkennungseinrichtungen sind beispielsweise Sicherungen, Leistungsschalter, etc. Sie können auch Bestandteil des leistungselektronischen Durchgangssystems sein, andernfalls werden sie als externe Schutz- bzw. Überlasterkennungseinrichtung bezeichnet.

Für leistungselektronische Durchgangssysteme sind zum Überstromschutz u. a. folgende Maßnahmen gegen Überlastung und Kurzschluss auf deren Ausgangsseite bekannt: Vollständige Unterbrechung des Stromflusses durch Überwachung des Stromes oder einer Strom-Zeitkennlinie und Abschaltung der Leistungshalbleiter bei Überschreitung eines definierten Grenzwertes; oder Auslösen von Sicherungen oder Leistungsschaltern, die auf die Strombelastbarkeit der Leistungshalbleiter des Durchgangssystems abgestimmt sind. Ferner Einsatz von Kurzschluss- bzw. Bypassschaltungen, die zwei Potenziale (z. B. Eingang und Ausgang des Durchgangssystems) elektrisch miteinander verbinden. Bekannte Schaltelemente dafür sind z. B. antiparallel geschaltete Thyristoren (Triacs) und mechanisch betätigte Schaltkontakte mit einem wiederverwendbaren Spannfederantrieb mit Hilfsmotor zum Spannen der Feder.

Sowohl im Fall der vollständigen Unterbrechung des Stromflusses als auch im Fall der Bypassschaltung wird im Überlastfall der originäre Zweck des Durchgangssystems (z. B. Spannungskorrektur oder Wiederherstellung der Versorgungsspannung) aufgegeben. Im Falle der Unterbrechung des Stromflusses wird nur der Schutz der Leistungselektronik bzw. des Durchgangssystems vor Überlastung sichergestellt. Die Unterbrechung der Versorgung nachgeschalteter Betriebsmittel und deren Ausfall werden billigend akzeptiert.

Charakteristisch für die genannte Bypassschaltung ist, dass im Überlastfall die Spannungsversorgung auf der Ausgangsseite für die nachgeschaltete Last (Verbraucher) weiterhin aufrechterhalten ist. Auch bei Ausfall des leistungselektronischen Durchgangssystems ist die Spannungsversorgung auf der Ausgangsseite weiterhin gegeben. Im Fall eines Kurzschlusses auf der Ausgangs- bzw. Lastseite funktionieren externe Schutzeinrichtungen (siehe oben) innerhalb des elektroenergetischen Verteilungssystems unverändert gegenüber einer Installation ohne leistungselektronisches Durchgangssystem. Die Bypassschaltung schützt diese teure Leistungselektronik bei Überlastung und Kurzschluss. Ihr Schaltvorgang ist reversibel, d. h. nach Beendigung der Überlast oder des Kurzschlusses wird die Bypassschaltung wieder geöffnet und das System nimmt den bestimmungsgemäßen Betrieb wieder auf. Eine Bypassschaltung wird daher bevorzugt eingesetzt, wenn eine hohe Verfügbarkeit der elektrischen Energieversorgung benötigt wird, eine robuste Überlastfähigkeit des Gesamtsystems gefordert ist, und zur Aufrechterhaltung der Selektivität ein Kurzschlussstrom bis zum Auslösen externer Schutzeinrichtungen weiter fließen muss. So werden die externen Schutzeinrichtungen weiter ansprechbereit gehalten. Diese Anforderungen sind typisch für Übertragungsnetze und Verteilnetze elektrischer Energie sowie elektroenergetische Netze für industrielle Fertigungsprozesse.

Im Zusammenhang mit leistungselektronischen Durchgangssystemen sind Bypassschaltungen in zweistufiger Bypasstopologie bekannt, die diversitär ausgeführt sind. Beispielsweise werden sowohl antiparallel geschaltete Thyristoren als auch mechanische Schaltkontakte, gegebenenfalls redundant zueinander, verwendet.

Sowohl einstufige als auch zweistufige Bypasstopologien sind sowohl für den Überlastbetrieb als auch für den Kurzschlussfall zu dimensionieren. Tendenziell gilt, dass Abmessungen, Gewicht und auch die Kosten einer Bypassschaltung mit der Strombelastbarkeit und der Stromflusszeit zunehmen. Mechanische Schalter werden außerdem aufgrund ihrer größeren zu bewegenden Massen mit zunehmender Strombelastbarkeit im Durchschaltvorgang langsamer. Die langsamere Schaltzeit bedingt wiederum die Notwendigkeit größerer Überbrückungszeiten durch parallel arbeitende Thyristoren. Die Folge ist ein weiterer Kostenanstieg für den Thyristorbypass, weil dieser für eine längere Überbrückungszeit ausgelegt werden muss.

Der Erfindung liegt die Aufgabe zugrunde, für Bypass-Schalteinrichtungen zum Überlastschutz leistungselektronischer Durchgangssysteme den Bauaufwand und die Herstellungskosten erniedrigen zu können. Zur Lösung werden das im Patentanspruch 1 angegebene Schutzverfahren für ein leistungselektronisches Durchgangssystem und die im Patentanspruch 7 angegebene Schutzanordnung oder -einrichtung für ein leistungselektronisches Durchgangssystem vorgeschlagen. Optionale, vorteilhafte Ausbildungen der Erfindung ergeben sich aus den abhängigen Ansprüchen.

Erfindungsgemäß wird die an sich bekannte, erste Bypass-Schalteinrichtung durch eine zweite Bypass-Schalteinrichtung höherer Strombelastbarkeit und/oder höherer Schaltgeschwindigkeit vor Überlastung, hervorgerufen z. B. durch einen ausgangsseitigen Kurzschlussstrom, geschützt. Dadurch wird der Vorteil erzielt, dass die Komponenten der an sich bekannten, ersten Bypass-Schalteinrichtung einfacher und wirtschaftlicher für einen deutlich kleineren Überlast- oder Kurzschlussstrom ausgelegt werden können.

Aufgrund der niedrigen Impedanz in Energieversorgungsnetzen können Kurzschlüsse zu sehr hohen Kurzschlussströmen mit einigen Zehntausend Ampere führen. Ein dabei entstehender Störlichtbogen hat einen enormen Energieeintrag zur Folge, der schlagartig metallische Kontaktmaterialien verdampfen kann. Um diesem Problem zu begegnen, wird nach einer optionalen Erfindungsausbildung vorgeschlagen, als ein oder mehrere, zweite Bypass-Schaltmittel einen oder mehrere, jeweils nicht wiederverwendbare Kurzschließer zu verwenden, welche jeweils bevorzugt mit einem Opferelement und/oder Gasgenerator oder pyrotechnischem Antrieb jeweils mit Zündeinrichtung ausgeführt sind.

Zum Anlagen- und Personenschutz sind Störlichbogen-Schutzeinrichtungen bekannt (vgl. Firmenschrift "Störlichtbogenschutz", ©2014 Firma DEHN + SÖHNE). Solche Systeme bestehen aus Detektoren und Auswertesystemen sowie Kurzschließer mit hoher Stromtragfähigkeit und deutlich kürzeren Schaltzeiten als bei wiederverwendbaren Schalteinrichtungen. Im Fall eines Störlichtbogens wird der Kurzschließer ausgelöst, der Kurzschlussstrom fließt über den Kurzschließer, und der Störlichtbogen erlischt. Der weiterhin fließende Kurzschlussstrom wird anschließend von einer externen Überstromschutzeinrichtung abgeschaltet. Vor einer Wiederinbetriebnahme ist der Kurzschließer zu ersetzen. Für den sehr seltenen Fall eines Störlichtbogens sind wiederverwendbare Kurzschließer zu aufwendig und teuer.

Nicht wiederverwendbare Kurzschließer sind an sich wie folgt bekannt: Zum einen mit Federkraftantrieb, der zwei leitfähige Kontakte bzw. Elektroden bei Auslösung miteinander verbindet. Die beiden Kurzschließerkontakte werden über ein Schmelzröhrchen zunächst auf Abstand gehalten. Das Röhrchen, auch Opferelement genannt, gibt durch stromflussbedingte thermische Zerstörung den Kurzschlussmechanismus frei (DE 10 2005 048 003 A1, DE 20 2006 020 737 U1). Zum anderen sind als nicht wiederverwendbare Kurzschließer solche mit Gasgenerator oder pyrotechnischem Antrieb bekannt, der einen Bolzen zur Erzeugung eines metallischen Kurzschlusses bewegt (vgl. US 7 145 757 B2, US 2005 0 152 078, CA 2 492 262 A1, DE 197 46 566 A1, EP 1 048 099 A1). Den genannten, nicht wiederverwendbaren Kurzschließern ist ein schneller Schließmechanismus und eine hohe Strombelastbarkeit gemeinsam.

Nach einer optionalen Erfindungsausbildung werden bei Überschreiten der vorbestimmten Schwelle für den Überlast- und/oder Kurzschlussstrom die ein oder mehreren zweiten Bypass-Schaltmittel mittels einer überstromsensitiven Auslöseeinrichtung aktiviert, die mit einer oder mehreren, jeweils passiv oder ausschließlich passiv arbeitenden Bauelementen zum Ansprechen auf die vorbestimmte Schwelle ausgelegt und/oder eingestellt ist. Durch die entsprechend passive Arbeitsweise wird nicht nur eine Vereinfachung des Auslösemechanismus, sondern auch eine erhöhte Funktionszuverlässigkeit für diesen erreicht.

Nach einer weiteren optionalen Erfindungsausbildung wird bei Ansprechen der Auslöseeinrichtung eine Kommutierung von durch das Durchgangssystem und/oder das oder die ersten Bypass-Schaltmittel erfolgendem, elektrischen Stromfluss bzw. Überstrom zu einem (jeweiligen) Ansteuereingang des oder der zweiten Bypass-Schaltmittel und damit eine Stromübernahme durch das oder die zweiten Bypass-Schaltmittel herbeigeführt. Dadurch erfolgt im Überlastfall eine Umgehung des oder der ersten, empfindlicheren Bypass-Schaltmittel.

Nach einer optionalen Erfindungsausbildung umfasst die überstromsensitive Auslöseeinrichtung eine in Reihe zu dem oder den ersten Bypass-Schaltmitteln angeordnete Überstromschutzeinrichtung sowie einen Auslöse-Strompfad, der von einem zwischen dem oder den ersten Bypass-Schaltmitteln und der Überstromschutzeinrichtung befindlichen Knotenpunkt zu dem oder den zweiten Bypass-Schaltmitteln geführt ist. Dadurch lässt sich eine Ansteuerung oder Betätigung des oder der zweiten Bypass-Schaltmittel bei Überschreiten einer vorbestimmten Überstromschwelle. Bewerkstelligen. Praktische Realisierungsmöglichkeiten für die Überstromschutzeinrichtung bestehen beispielsweise in einer Schmelzsicherung oder einem Leistungsschalter.

Gemäß einer optionalen Erfindungsausbildung sind an dem genannten Knotenpunkt die Überstromschutzeinrichtung und wenigstens ein zweites Bypass-Schaltmittel parallel angelegt. Eine konkretere Realisierung kann darin bestehen, dass als jeweiliger Ansteuer- oder Auslöseeingang ein Opferelement oder ein Gasgenerator bzw. pyrotechnischer Antrieb des nicht wiederverwendbaren Kurzschließers mit dem genannten Auslöse-Strompfad bzw. dem Knotenpunkt zur Auslösung des Kurzschließvorgangs über das oder die zweiten Bypass-Schaltmittel verbunden sind.

Im Rahmen erfindungsgemäßer Ausbildungen wird der Schutz vor einem unzulässig hohen Strom, der das oder die ersten Bypass-Schaltmittel überlasten könnte, z. B. hervorgerufen durch einen Kurzschluss auf der Ausgangsseite, durch einen oder mehrere nicht wiederverwendbare Kurzschließer übernommen. In diesem Zusammenhang besteht eine optionale Erfindungsausbildung darin, dass das eine oder die mehreren zweiten Bypass-Schaltmittel elektrisch parallel zu einer Reihenschaltung angeordnet sind, die aus dem oder den ersten Bypass-Schaltmitteln und der Überstromschutzeinrichtung gebildet ist. In diesem Sinne ist beispielsweise ein nicht verwendbarer Kurzschließer elektrisch parallel zu der Reihenschaltung aus ersten Bypassschalter und Überstromschutzeinrichtung angeordnet, die bei dem unzulässig hohen Strom für den ersten Bypass-Schalter auslöst bzw. anspricht.

Ein mit der Erfindung erzielbarer Vorteil besteht darin, dass der mittels des oder der zweiten Bypass-Schaltmittel und der damit verbundenen, überstromsensitiven Auslöseeinrichtung realisierte Leistungselektronik-Schutzmechanismus ohne Eingreifen einer übergeordneten Überlast- oder Fehlererkennung funktioniert und zudem auch von Hilfsspannungsversorgungen unabhängig ist. Der Schutzmechanismus ist auch wirksam, wenn eine Überlastung bei einem oder mehreren, bereits geschlossenen bzw. aktivierten, ersten Bypass-Schaltmitteln auftritt.

Um den Ansteuerungs- bzw. Auslösemechanismus des nicht wiederverwendbaren Kurzschließers vor unzulässiger Alterung oder ungewollter Auslösung zu schützen bzw. dessen technische Zuverlässigkeit und Sicherheit zu erhöhen, ist nach einer optionalen Erfindungsausbildung vorgesehen, das oder die zweiten Bypass-Schaltmittel mittels einer eine Strombeaufschlagung begrenzenden Entlastungseinrichtung zu schützen. In konkreter Realisierung dieses Gedankens können beispielsweise ein oder mehrere, insbesondere zueinander parallel geschaltete, in den genannten Auslöse-Strompfad eingefügte Entlastungselemente vorgesehen sein, die beispielsweise mit einem oder mehreren ohmschen Widerständen oder einem DIAC (Zweirichtungsdiode) ausgeführt sind. Dabei sind das oder die Entlastungselemente mit dem jeweiligen Ansteuereingang, beispielsweise einem Opferelement eines nicht wiederverwendbaren Kurzschließers oder dessen Gasgenerator oder pyrotechnischem Antrieb, des oder zweiten Bypass-Schaltmittel verbunden.

In optionaler Weiterentwicklung dieses Erfindungsgedankens können auch mehrere Entlastungselemente parallel geschaltet werden, um den Auslöse- bzw. Ansteuerungsmechanismus für das oder die zweiten Bypass-Schaltmittel redundant auszuführen. Ferner ist es zweckmäßig, den jeweiligen Ansteuereingang des oder der zweiten Bypass-Schaltmittel zweipolig und von dessen oder deren Schaltkontakten elektrisch isoliert oder galvanisch getrennt zu realisieren. Dabei sind die beiden Pole des Ansteuereingangs mit je einem Pol der Überstromschutzeinrichtung verbunden. In Kombination mit dieser Struktur besteht eine Weiterbildung der Erfindung darin, dass zwischen den Polen der Überstromschutzeinrichtung und des Ansteuereingangs je ein oder mehrere Entlastungselemente eingefügt sind. Ist also der Auslösemechanismus bzw. der Ansteuereingang (beispielsweise gasgetriebener, metallischer Bolzen) des Kurzschließers von den Haupt-Kurzschließerkontakten elektrisch isoliert ausgeführt, wie z. B. bei dem Zündmechanismus für Kurzschließer-Gasantriebe, können Entlastungsmittel auch auf beide Anschlusszweige des Auslösemechanismusses bzw. Ansteuereingangs und der zweipoligen Überstromschutzeinrichtung aufgeteilt werden. Die Gefahr etwaiger Fehlauslösungen lässt sich so vermindern.

Vielfach ist das leistungselektronische Durchgangssystem zum Zusammenwirken mit einem dreiphasigen Übertragungs- oder Verteilnetz oder Drehstromsystem vorgesehen. In dieser Hinsicht besteht eine optionale Erfindungsausbildung dahingehend, dass je ein zweites oder je ein Satz mehrerer zweiter Bypass-Schaltmittel zur Verbindung und/oder energieübertragenden Kopplung von elektrischen Außenleitern erster und zweiter Phase und zweiter und dritter Phase eingesetzt werden. Besonders vorteilhaft können dabei die genannten zweiten Bypass-Schaltmittel für die Verbindung erster und zweiter und zweiter und dritter Phase auch gemeinsam oder gleichzeitig zur Verbindung und/oder energieübertragenden Kopplung von elektrischen Außenleitern dritter und erster Phase eingesetzt werden, wobei diese gemeinsam oder gleichzeitig einen gemeinsamen Bypass-Strompfad bilden. Diese Anordnung ergibt zweckmäßig eine Sparschaltung, bei welcher die einphasige Bypass-Schaltung nur zweimal anstatt dreimal benötigt wird.

Gemäß eine konkreter ausgeführten Variante einer solchen Sparschaltung werden je ein zweites oder je ein Satz mehrerer zweiter Bypass-Schaltmittel zur Verbindung und/oder energieübertragenen Kopplung von elektrischen Außenleitern erster und zweiter Phase und zweiter und dritter Phase angeordnet, und über eine Reihenschaltung der genannten zweiten Bypass-Schaltmittel die elektrischen Außenleiter dritter und erster Phase verbunden und/oder energieübertragend gekoppelt. In weiterer Präzisierung dieses Gedankens sind dazu das wenigstens eine zweite Bypass-Schaltmittel zur Verbindung und/oder energieübertragenden Kopplung erster und zweiter Phase und das weitere, wenigstens eine zweite Bypass-Schaltmittel zur Verbindung bzw. Kopplung von zweiter und dritter Phase zur Realisierung der Reihenschaltung über je eine ihrer jeweiligen Haupt-Kontaktelektroden miteinander verbunden. Es wird also bei der optionalen "Sparschaltungs"-Variante anstelle von drei Einphasen-Kurzschließern mit nur zwei Einphasen-Kurzschließern gearbeitet, wobei der Kurzschluss zwischen den verbleibenden Phasen (dritte und erste Phase beispielsweise) über die Reihenschaltung der beiden genannten Einphasen-Kurzschließer realisiert ist. Diese Schaltungsstruktur ist besonders zweckmäßig im Zusammenhang mit dem Einsatz eines Durchgangssystems mit drei seriell eingefügten Transformatoren, im vorliegenden Erfindungsrahmen also dann, wenn das leistungselektronische Durchgangssystem zur Wirkungsverbindung mit einem dreiphasigen Übertragungs- und Verteilnetz oder Drehstromsystem transformatorisch ausgeführt ist.

Weitere Einzelheiten, Merkmale, Merkmalskombinationen und Wirkungen auf der Basis der Erfindung ergeben sich aus der nachfolgenden Beschreibung bevorzugter, beispielhafter Ausführungswege der Erfindungen und den Zeichnungen. Diese zeigen in:
Figur 1 nach Art eines Blockschaltbilds die prinzipielle Anordnung eines leistungselektronischen Durchgangssystems in Reihe zu elektrischen Betriebsmitteln der elektrischen Energieerzeugung, - übertragung,- - verteilung und Verbraucheranlagen (technischer Hintergrund)
Figur 2 eine gegenüber Figur 1 abgewandelte Prinzipdarstellung mit Erzeugern elektrischer Energie auf beiden Seiten des elektrischen Durchgangssystems, (technischer Hintergrund)
Figur 3 in einer Darstellung nach Art eines Blockschaltbilds die prinzipielle Struktur des leistungselektronischen Durchgangssystems mit einer Bypassschaltung, wie nach dem Stand der Technik bekannt,
Figur 4 nach Art eines Blockschaltbilds die prinzipielle Struktur der erfindungsgemäßen Schutzanordnung,
Figur 5 nach Art eines Blockschaltbilds eine abgewandelte Struktur der erfindungsgemäßen Schutzanordnung,
Figur 5a eine detaillierte Darstellung der Anordnung von Überstromschutz und Kurzschließer mit Verwendung eines Federkraftantriebes mit Schmelzröhrchen,
Figur 5b in detaillierterer Darstellung eine Realisierungsvariante der prinzipiellen Anordnung nach Figur 5,
Figur 5c eine detailliertere Darstellung der Gesamtanordnung mit Durchgangssystem, ersten Bypass-Schaltmitteln und zweitem Bypass-Schaltmittel mit Gasantrieb mit Zündmechanismus und metallischem Bolzen,
Figur 5d in einer Darstellung nach Art eines Blockschaltbilds die Anordnung des leistungselektronischen Durchgangssystems mit erster Bypass-Schaltung, Überstromschutz und zweiter Bypass-Schaltung bei einer Reihenschaltung mit Serientransformator,
Figur 5e eine detailliertere Darstellung der Gesamtanordnung mit Durchgangssystem mit Serientransformator und ersten und zweiten Bypass-Schaltmitteln,
Figur 5f in der Darstellung nach Art eines Blockschaltbilds den Einsatz der erfindungsgemäßen Anordnung mit Durchgangssystem, ersten Bypass-Schaltungen, Überstrom-Schutzeinrichtungen und zweiten Bypass-Schalteinrichtungen und seriell eingefügten Serien- bzw. Injektionstransformatoren in der Anwendung auf ein dreiphasiges Übertragungs- und Verteilnetz oder Drehstromsystem,
Figur 6 Schaltbilder von vier verschiedenen Ausführungsvarianten für eine Entlastungseinrichtung.

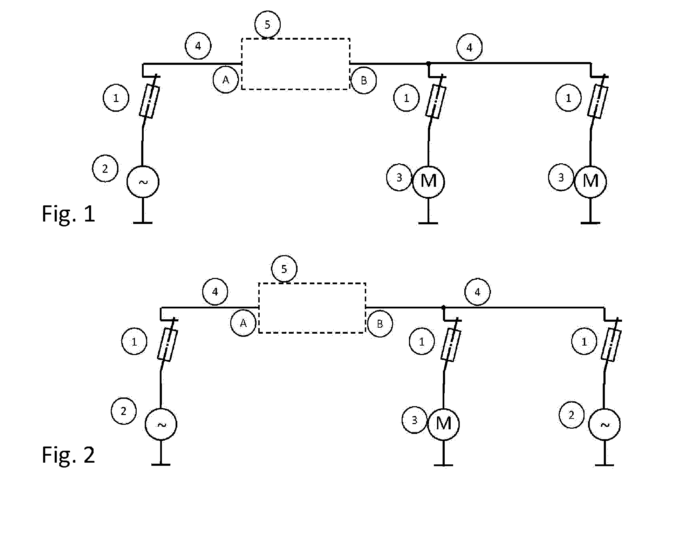

Gemäß Figur 1 ist eine Überstromschutzeinrichtung 1, beispielsweise Schmelzsicherung oder Leistungsschalter, in Reihe zu einem Erzeuger 2 elektrischer Energie (beispielsweise Kraftwerk, Dieselgenerator, Windkraftanlage oder dergleichen) zu dessen Schutz und Absicherung angeordnet. Über einen Teil eines Übertragungs- und Verteilnetzes 4 ist die Eingangsseite A eines leistungselektronischen Durchgangssystems mit dem Ausgang des Erzeugers 2 - mittelbar über die nachgeschaltete Überstromschutzeinrichtung 1, beispielsweise geschlossener Leistungsschalter - gekoppelt. Die Ausgangsseite des Durchgangssystems 5 ist ebenfalls mit einem Teil des Übertragungs- und Verteilnetzes 4 gekoppelt. Es handelt sich also um eine Anordnung des Durchgangssystems 5 in Reihe zu den elektrischen Betriebsmitteln der elektrischen Energieerzeugung, Übertragung, Verteilung und der Verbraucheranlagen. Im Fall der Figur 1 sind als Verbraucher 3 beispielsweise zwei (oder auch mehr) Elektromotoren M, jeweils über eine Überstromschutzeinrichtung 1, parallel an das Übertragungs- und Verteilnetz 4 angelegt.

Von der Anordnung nach Figur 1 unterscheidet sich die nach Figur 2 dadurch, dass auch der der Ausgangsseite B der Durchgangssystems 5 nachgeschaltete Netzbereich des Übertragungs- und Verteilnetzes 4, neben dem Verbraucher 3, beispielsweise Elektromotor M, noch einen Generator oder sonstigen Erzeuger 2 aufweist, wobei der ausgangsseitige Erzeuger 2 und Verbraucher 3 zueinander parallel an das Übertragungs- und Verteilnetz 4 angelegt sind.

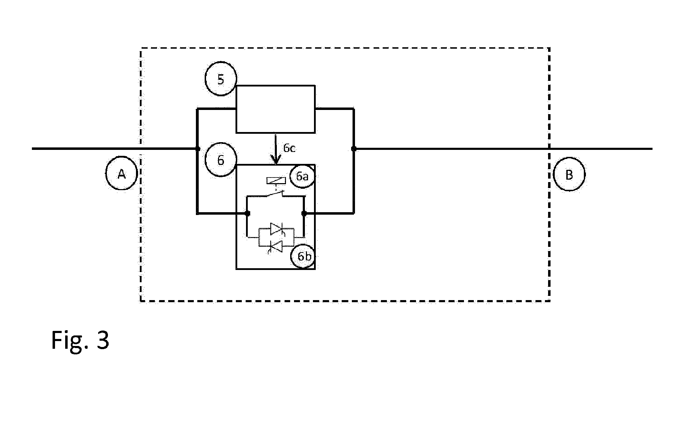

Gemäß Figur 3 ist innerhalb der gestrichelt umrandeten Einheit das Durchgangssystem 5 mit einer Bypass-Schaltung 6 versehen. Die Bypass-Schaltung 6 entspricht in der Terminologie zur Definition der beanspruchten Erfindung den ersten Bypass-Schaltmitteln. Diese sind gemäß Figur 3 mit zwei zueinander redundanten und technologisch diversitär ausgeführten Parallelzweigen realisiert: Der erste Zweig bzw. Strompfad der Parallelschaltung ist mit einem mechanischen Schaltkontakt 6a, beispielsweise elektromagnetisch betätigter Öffner, und der zweite Zweig bzw. Strompfad beispielsweise mit zwei antiparallel geschalteten Thyristoren (Triac) versehen. Die Parallelschaltung aus mechanischem Schaltkontakt 6a und Thyristorschalter oder Triac 6b liegt parallel zum Durchgangssystem 5 an den eingangs- und ausgangsseitigen Klemmen A, B an. Der ein- oder gemäß Figur 3 mehrstufige Bypass-Schalter 6 lässt sich über ein Auslöseorgan 6c vom Durchgangssystem 5 aus ansteuern. Dazu kann eine Überlast- oder Fehlererkennung innerhalb einer Steuerung des Durchgangssystems 5 implementiert sein. Alternativ oder redundant zusätzlich kann zu demselben Zweck eine Überlast- oder Fehlererkennung extern, außerhalb des Durchgangssystems 5 eingerichtet sein. Im Falle einer Auslösung bzw. Ansteuerung werden die unterschiedlichen elektrischen Potenziale/Anschlussklemmen A, B (eingangsseitig und ausgangsseitig) leitfähig miteinander verbunden, um das Durchgangssystem zu überbrücken.

Zweckmäßig sind das Bypass-Auslöseorgan 6c und der mechanische Schaltkontakt 6a so zu gestalten, dass der Schaltkontakt bei fehlender Hilfsenergie geschlossen ist. Damit ist auch bei Ausfall des Durchgangssystems oder bei Ausfall der zusätzlichen Überlast- und Fehlererkennung sichergestellt, dass die Bypass-Schaltung geschlossen ist und das Durchgangssystem überbrückt. Analog lässt sich auch die Zündeinrichtung für den Thyristorschalter oder Triac 6b so auslegen, dass eine Zündung auch bei Ausfall der Überlast- und Fehlererkennung erfolgt, wie an sich bekannt.

Um Anforderungen an eine schnelle Stromübernahme zum Schutz der Leistungselektronik im Durchgangssystem 5 im Kurzschlussfall zu genügen, lässt sich mit der gemäß Figur 3 zweistufigen Bypasstopologie in einer ersten Schaltstufe der Triac 6b mit den antiparallel geschalteten Thyristoren ansteuern. Die Überbrückungszeit vom Zünden der Thyristoren bis zur Stromübernahme auf den langsameren, mechanischen Schaltkontakt 6a ist ein wesentliches Auslege- und Kostenkriterium für die Dimensionierung der Thyristoren. In einer zweiten Schaltstufe wird der Stromfluss bzw. der Kurzschlussstrom durch den mechanischen Schaltkontakt 6a übernommen und aufrecht erhalten, bis eine selektiv zugeordnete, externe Schutzeinrichtungen 1 anspricht und auslöst. Bei länger anhaltendem Überlastbetrieb begünstigt der mechanische Schaltkontakt 6a außerdem niedrigere Verluste und eine wirtschaftlichere Auslegung für die Kühlung der Thyristoren bzw. des Triacs 6b.

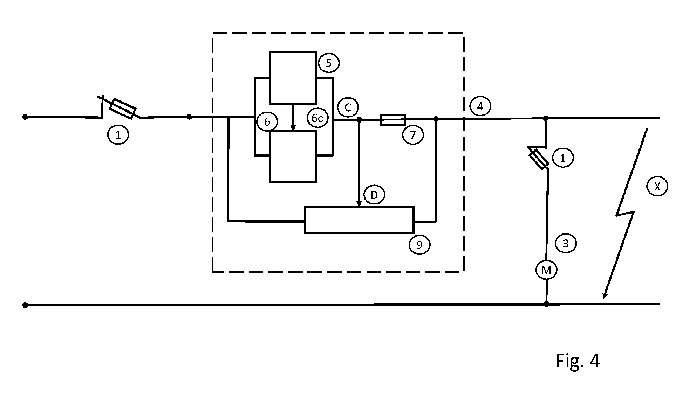

Gemäß Figur 4 unterscheidet sich die dort gestrichelt umrandete Einheit von der nach Figur 3 erfindungsgemäß dadurch, dass der ersten Bypass-Schaltung 6 oder der Parallelschaltung aus Durchgangssystem 5 und erster Bypassschaltung 6 eine Überstromschutzeinrichtung 7 in Reihe nachgeschaltet ist, und dass dieser Reihenschaltung mindestens ein zweites Bypass-Schaltmittel 9 als Kurzschließer parallel geschaltet ist. Der erste Pol der Überstromschutzeinrichtung 7 ist direkt mit dem Ausgang der ersten Bypass-Schaltung 6 verbunden. Der zweite Pol der Überstromschutzeinrichtung 7 ist mit dem Ausgang des zweiten Bypass-Schaltmittels bzw. Kurzschließers 9 verbunden. Ferner ist ein Knotenpunkt C zwischen dem Ausgang der ersten Bypass-Schaltung 6 und dem Eingang der Überstromschutzeinrichtung 7 mit einem Auslöse- bzw. Ansteuereingang D des zweiten Bypass-Schaltmittels bzw. Kurzschließers 9 verbunden.

Tritt gemäß Fig.4 im Übertragungs- und Verteilnetz 4 beispielsweise auf der Lastseite im Bereich des Verbrauchers 3 mit Elektromotor M eine Überlast oder ein Kurzschluss X auf, wird dies zunächst von der im Durchgangssystem 5 implementierten Überlast- oder Fehlererkennung erkannt, und über das Auslöseorgan 6c wird die erste Bypass-Schaltung 6 angesteuert. Übersteigt jedoch der aufgrund der Überlast oder des Kurzschlusses X entstehende Strom eine vorbestimmte Schwelle, spricht die Überstromschutzeinrichtung 7 an, indem diese beispielsweise ihren Strompfad unterbricht. Es erfolgt eine Kommutierung des Überlast- oder Kurzschlussstroms, welcher die über die Überstromschutzeinrichtung 7 vorbestimmte Schwelle übersteigt, auf den Ansteuer- und Auslöseeingang des zweiten Bypass-Schaltmittels 9. Durch Auslösen der Überstromschutzeinrichtung 7 ergibt sich eine nahtlose und nur mit passiven Bauelementen bewerkstelligte Übernahme des die vorbestimmte Schwelle (bestimmt durch die Auslegung der Überstromschutzeinrichtung) übersteigenden Überlast- oder Kurzschlussstromes auf das zweite Bypass-Schaltmittel 9, ohne aktives Eingreifen einer Fehlererfassungseinrichtung mit aktiver Signalverarbeitungselektronik. Das zweite Bypass-Schaltmittel 9 wird selektiv, beeinflusst nur durch die Auslösecharakteristik der vorzugsweise rein passiv ausgeführten Überstromschutzeinrichtung 7, ausgelöst.

Mit der Überstromschutzeinrichtung 7 (beispielsweise Schmelzsicherung, Leistungsschalter oder dergleichen) wird ein Schutz der Leistungshalbleiter im Durchgangssystem 5 und der für geringere Überlast- und Kurzschlussströme unterhalb der vorbestimmten Schwelle ausgelegten, ersten Bypass-Schaltung 6 erreicht. So lässt sich die erste Bypass-Schaltung 6 nur im Hinblick auf den Betriebsstrom und geringer Überlast dimensionieren und damit kleiner und wirtschaftlicher bzw. billiger auslegen. Vor allem aber kann der von der Überlast oder dem Kurzschluss X verursachte Überlast- oder Kurzschlussstrom weitgehend unbeeinflusst über die dortige Fehlerstelle im Übertragungs- und Verteilnetz 4 weiter fließen. Dort etwaig vorhandene, externe Schutzeinrichtungen können weiterhin sicher auslösen. Zweckmäßig ist die "interne", die erste Bypassschaltung 6 und das Durchgangssystem 5 überwachende Überstromschutzeinrichtung 7 in ihrer Auslegung und/oder Dimensionierung selektiv auf externe Schutz- bzw. Überlasterkennungseinrichtungen 1 im Übertragungs- und Verteilnetz 4 und/oder auf die Strombelastbarkeit des Durchgangssystems 5 und der ersten Bypassschaltung 6 abgestimmt.

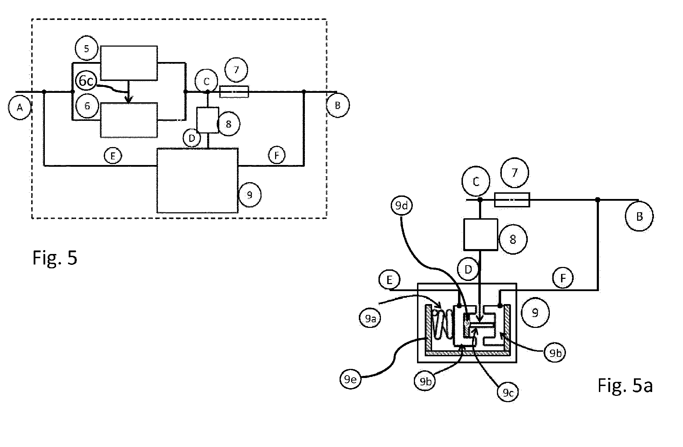

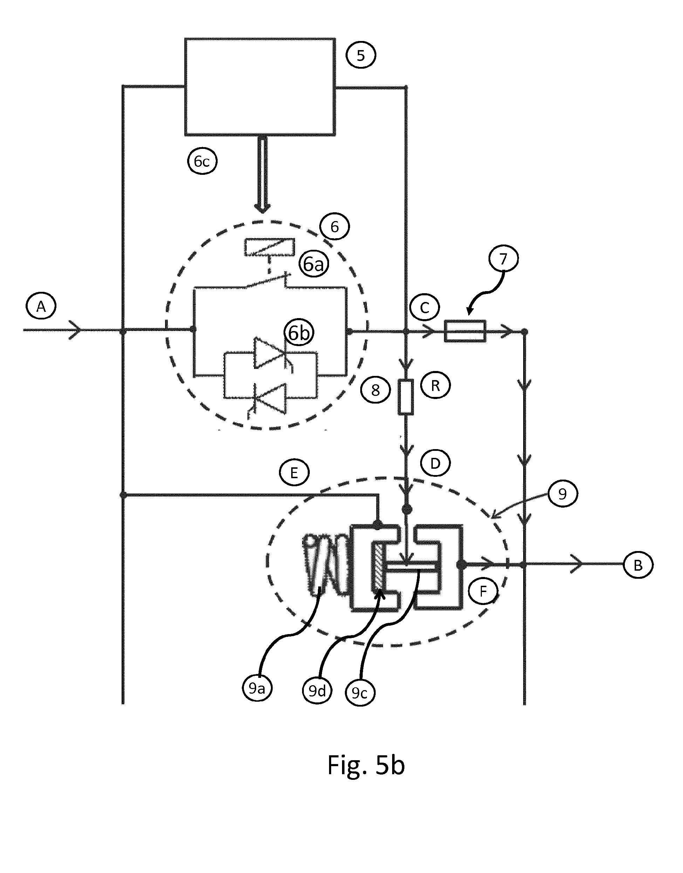

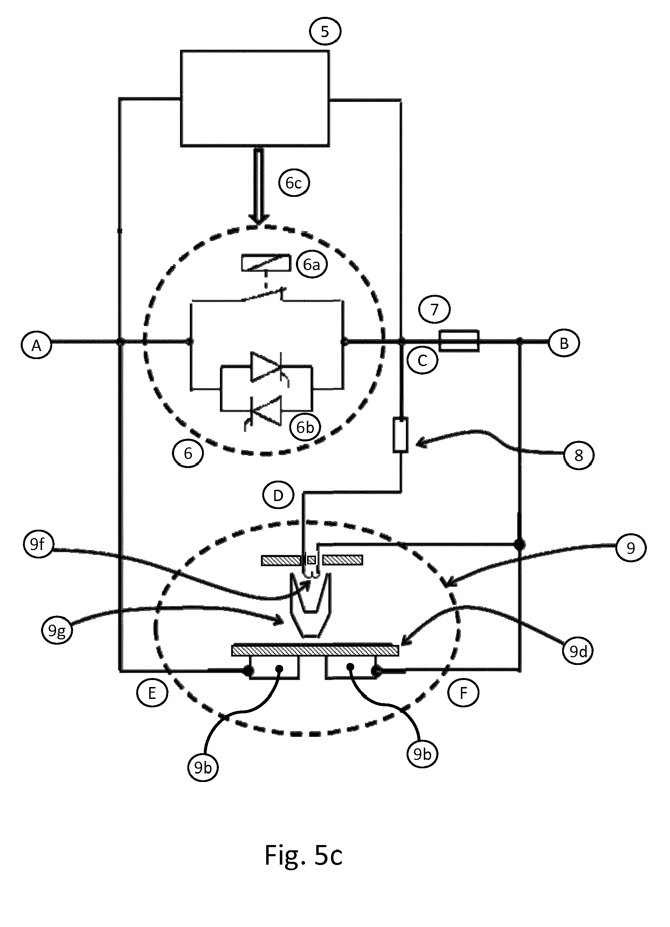

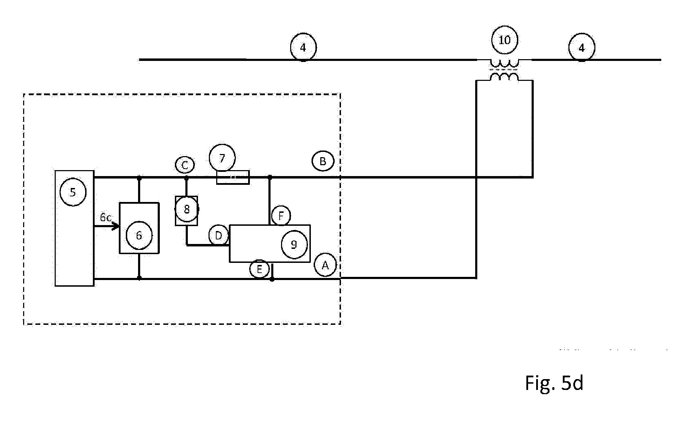

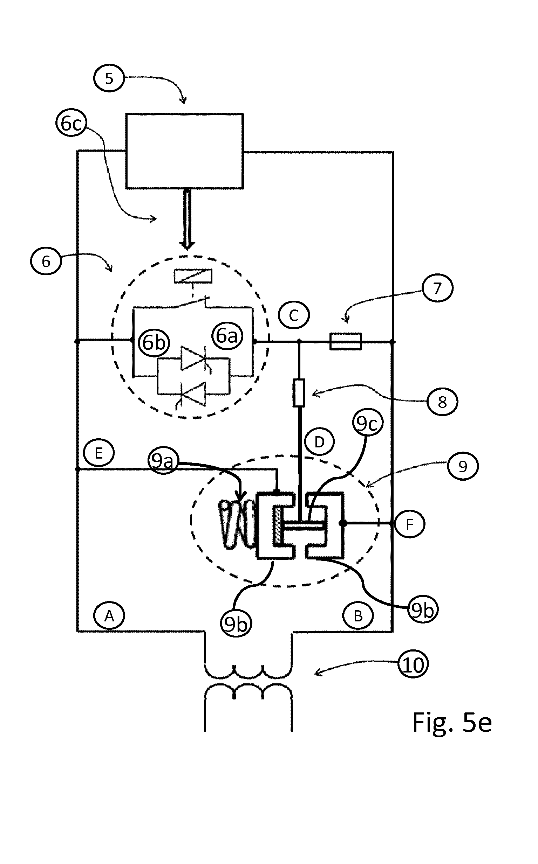

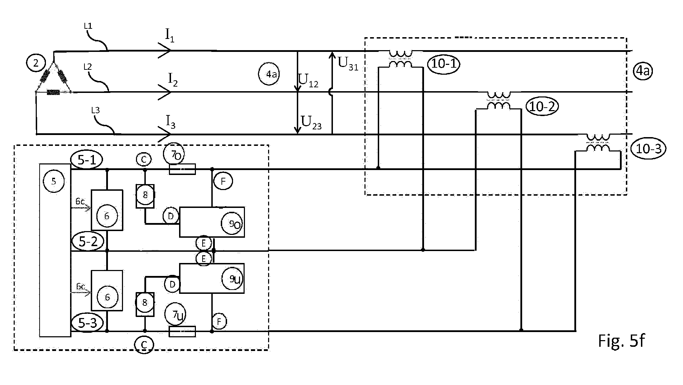

Gemäß Figur 5 ist das zweite Bypass-Schaltmittel 9 als Kurzschließer mit Hauptkontakten E und F ausgeführt, die jeweils mit der eingangsseitigen Anschlussklemme A bzw. der ausgangsseitigen Anschlussklemme B des Durchgangssystems 5 verbunden sind. Der bereits weiter oben umschriebene Knotenpunkt C ist über eine Entlastungseinrichtung 8 mit der Anschluss- bzw. Ansteuerklemme D des zweiten Bypass-Schaltmittels bzw. des Kurzschließers 9 gekoppelt. Für den Kurzschließer 9 ergibt sich ein Auslösestromkreis, der über den Knotenpunkt C, die Entlastungseinrichtung 8, die Ansteuer- bzw. Auslöseklemme D und den Kurzschließer-Hauptkontakt F verläuft, der direkt mit der ausgangsseitigen Klemme B verbunden ist.

Von der Ausführung gemäß Figur 4 unterscheidet sich die nach Figur 5 durch die Einfügung der Entlastungseinrichtung 8 zwischen dem Knotenpunkt C und der Ansteuer- bzw. Auslöseklemme D des zweiten Bypass-Schaltmittels 9. Die Entlastungseinrichtung 8 dient dem Schutz des Ansteuer- bzw. Auslösemechanismus des zweiten Bypass-Schaltmittels bzw. Kurzschließers 9 vor unzulässiger Alterung oder ungewollter Auslösung. Ist gemäß Fig. 5 der Kurzschließer nicht wiederverwendbar mit Auslösung über ein Opferelement 9c (s. Fig. 5a) ausgeführt, ist zur Herbeiführung der Erwärmung des Opferelements 9c ein relativ großer Ansteuer- bzw. Auslösestrom notwendig. In einem solchen Fall kann die Entlastungseinrichtung 8 einfach durch einen ohmschen Widerstand realisiert sein (R in Fig. 5b), der auf den elektrischen Widerstand der Schmelzsicherung abgestimmt ist und den Strom durch das Opferelement 9c, beispielsweise thermisch schmelzbares Röhrchen, klein hält, solange der Strompfad durch die Überstromschutzeinrichtung 7, beispielsweise Schmelzsicherung, geschlossen ist.

Gemäß Figur 5a ist der als zweites Bypass-Schaltmittel 9 dienende Kurzschließer nicht wiederverwendbar mit einem leitfähigen Schmelzröhrchen als Opferelement 9c ausgeführt, welches als Abstandselement zwischen den beiden leitfähigen, beispielsweise metallischen Kontaktelementen 9b angeordnet ist, welche die obigen Kurzschließer-Hauptkontakte E, F bilden. Das Opferelement 9c in Form des leitfähigen Schmelzröhrchens liegt mit seinem einen Ende direkt an einem der beiden Kontaktelemente 9b an, wobei ein leit- und kurzschlussfähiger Materialübergang gebildet ist. Mit dem anderen Ende stößt das Opferelement auf eine (gestrichelt gezeichnete) Isolierschicht 9d, welche an der dem Schmelzröhrchen zugewandten Innenseite des anderen Kontaktelements 9b angebracht ist. Dadurch ist dieses Kontaktelement an seiner Innenseite zwischen seinen U-artig vorspringenden Schenkelenden vom Schmelzröhrchen elektrisch isoliert. An seiner gegenüberliegenden Außenseite liegt ein Federkraftantrieb 9a mit seinem einen Ende an, welcher mit seinem anderen Ende gegen die Innenseite eines Isolierrahmens 9e abgestützt ist. Steigt im Überstrom- oder Kurzschlussfall der Strom vom Knotenpunkt C über die Entlastungseinrichtung 8 und die Ansteuer- bzw. Auslöseklemme D durch das Schmelzröhrchen 9c ausreichend stark an, erwärmt sich letzteres und wird zerstört. Dadurch geht seine Abstandhalterfunktion verloren, und der Federkraftantrieb 9a drückt das ihm zur Verstellung zugeordnete Kontaktelement 9b gegen das andere, gegenüberliegende, innen nicht isolierte Kontaktelement, bis beide über ihre U-artig zueinander vorspringenden Schenkelenden einander jeweils mit leitfähigen Metall körperlich kontaktieren, und die Kurzschließer-Hauptkontakte E, F gleichsam einen "Kurzschlussbügel" bilden, dabei die ein- und ausgangsseitigen Potenzialklemmen A, B des Durchgangssystems 5 miteinander verbindend. Das Durchgangssystem 5 nebst der ersten Bypass-Schaltung 6 sind damit umgangen bzw. wirkungslos, aber vor Überlastung geschützt.

Figur 5b dient zur Verdeutlichung der Stromaufteilung auf die interne Überstromschutzeinrichtung 7 und auf den Auslösestrompfad C-D (vergleiche Stromrichtungspfeile). Schaltungstechnisch liegen die Überstromschutzeinrichtung 7 und der als zweites Bypass-Schaltmittel dienende Kurzschließer 9 über den Knotenpunkt C, das Opferelement/Schmelzröhrchen 9c und dem mit dem Schmelzröhrchen verbundenen Hauptkontakt F parallel. Entsprechend der Stromteilerregel teilt sich der Strom umgekehrt proportional zu den ohmschen Widerständen der beiden (mit Stromrichtungspfeilen in Figur 5b markierten) Strompfade auf. Bereits bei normalen Betriebsströmen kann das zu einer unzulässigen Erwärmung des Opferelements 9c führen und auf Dauer ein ungewolltes Auslösen des Kurzschließers bzw. zweiten Bypass-Schaltmittels 9 bewirken. Die ohmschen Widerstände der beiden mit Stromrichtungspfeilen markierten Strompfade liegen beide im Milliohm-Bereich und werden unter anderem durch Kabelwiderstände, Übergangskontakte und Wahl bzw. Dimensionierung der Überstromschutzeinrichtung 7 beeinflusst. Die ohmschen Widerstände sind daher insgesamt nur sehr schwer quantifizierbar. Um eine zulässige und bestimmte Stromverteilung sicherzustellen, wird mit der Entlastungseinrichtung 8 eine definierte Stromverteilung erzwungen. Bei einer Ausführung ausschließlich mit einem ohmschen Widerstand R ist dessen Widerstandswert so zu wählen, dass im Normalbetrieb keine unzulässige Erwärmung auftritt, aber im Fehlerfall auch keine wesentliche Beeinflussung des Kurzschlussstroms stattfindet.

In der Anordnung gemäß Figur 5b wird bei auftretender Überlast oder Kurzschluss zunächst die erste, wiederverwendbare Bypass-Schaltung 6 geschlossen, und darin zunächst der wiederverwendbare Thyristorschalter 6b. Löst bei ausreichend starkem Überlast- oder Kurzschlussstrom die Überstromschutzeinrichtung 7 aus, wird der Überlast- oder Kurzschlussstrom unmittelbar und unverzögert über das Opferelement 9c, und nach dessen thermischer Zerstörung über die Kurzschließer-Hauptkontakte E, F zur Ausgangsklemme B weitergeführt.

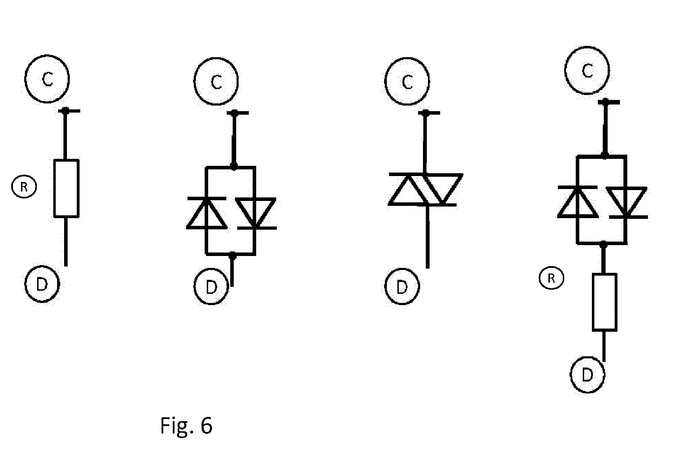

Gemäß Figur 5c ist der Kurzschließer 9 zur Auslösung durch einen Gasantrieb 9f mit Zündmechanismus (Zündspule in der Zeichnung angedeutet) ausgebildet. Über die zugehörige Ansteuer- bzw. Auslöseklemme D reichen bereits einige Ampere für die Auslösung, wobei der metallische Bolzen 9g per Druck die Isolierung 9d zertrennt bzw. durchschlägt, welche vorher die beiden Kontaktelemente 9b mechanisch verbunden und auf Abstand gehalten hat. Beim Durchtrennen der Isolierung 9d per Gasantrieb gerät der metallische Bolzen 9g in elektrisch leitender Anlage an jede der beiden Kontaktelementen 9b, woraus sich wieder der "Kurzschlussbügel" zur Bildung des Bypass ergibt. Hier kann die Entlastungseinrichtung 8 auch als Diac oder mit antiparallel geschalteten Dioden (in Figur 5c nicht gezeichnet) mit jeweils einem Widerstand zur Strombegrenzung in Reihe ausgeführt sein (vgl. Fig.6).

Im Falle des in Fig. 5c dargestellten Kurzschließers 9 als zweites Bypassschaltmittel mit Zündeinrichtung für pyrotechnische oder Gasantriebe wird der Überlaststrom nach nur minimaler Verzögerung über die Kurzschließer-Hauptkontakte E, F weitergeführt. Die Auslösung der Zündung des Gasantriebs an der Ansteuer- bzw. Auslöseklemme D benötigt einen nur relativ kleinen Strom. Infolgedessen kann die Entlastungseinrichtung 8 auch mit einem Diac ergänzt werden, um einen Stromfluss durch den Zündmechanismus im Normalbetrieb vollständig zu unterbinden. Erst beim Auslösen der Überstromschutzeinrichtung 7, beispielsweise einer Schmelzsicherung, macht der dann auftretende Spannungsanstieg den beispielsweise Diac als Entlastungseinrichtung 8 leitfähig und zündet beispielsweise einen Treibsatz des Gasantriebes.

Gemäß Fig. 5d kann die erfindungsgemäße Anordnung beispielsweise auch bei einem Durchgangssystem 5 mit einem in das Übertragungs- und Verteilnetz 4 in Reihe eingefügten Serientransformator 10 verwendet werden. Dieser ist mit dem Durchgangssystem 5 bzw. dessen Eingangs- und Ausgangsklemme A, B derart verbunden, dass eine gegebenenfalls generierte Korrekturspannung von einer Transformatorseite über elektromagnetische Kopplung auf die andere, seriell in das Übertragungs- und Verteilnetz 4 eingefügte Transformatorseite übertragen und so in das Übertragungs- und Verteilnetz 4 eingespeist wird. Die Figur 5e zeigt die grundsätzlich gleiche Anordnung mit noch mehr gerätetechnischen Details, wobei früher bereits verwendete Bezugszeichen entsprechend funktionierende Teile bezeichnen.

Gemäß Figur 5f ist das leistungselektronische Durchgangssystem 5 zur Wirkungsverbindung mit einem dreiphasigen Übertragungs- und Verteilnetz 4a ausgebildet. Dazu ist das Durchgangssystem 5 mit einem dreipoligen Ausgang realisiert, wobei jeder Ausgangspol 5-1, 5-2, 5-3 unmittelbar oder mittelbar mit einem jeweiligen, in Reihe in das dreiphasige Übertragungs- und Verteilnetz 4a eingefügten Serientransformator 10-1, 10-2, 10-3 gekoppelt ist. Im gezeichneten Ausführungsbeispiel sind zwei der drei Ausgangspole, nämlich der erste und dritte 5-1 und 5-3 mit dem jeweils zugeordneten Serientransformator 10-1 und 10-3 mittelbar über eine jeweilige, zeichnerisch obere und untere Überstromschutzeinrichtung 7o, 7u gekoppelt. Der in Figur 5f zeichnerisch mittlere, zweite Ausgangspol 5-2 ist direkt mit dem zugeordneten Serientransformator 10-2 verbunden. Dieser zweite Ausgangspol 5-2 ist in einem gemeinsamen Knotenpunkt mit je einem Kurzschließer-Hauptkontakt E zweier zeichnerisch oberer und unterer Kurzschließer 9o, 9u (jeweils als zweite Bypass-Schaltmittel im Sinne der Erfindungsdefinition) verbunden. Der jeweils andere Hauptkontakt F der beiden Kurzschließer 9o bzw. 9u ist mit einem ersten bzw. einem zweiten Anschlusspol eines der drei Serientransformatoren, nämlich dem zeichnerisch untersten, dritten Serientransformator 10-3, verbunden. Durch diese spezifische Schaltungsanordnung werden zum Schutz des dreiphasig Korrekturspannungen in das Übertragungs- und Verteilnetz 4a einspeisenden Durchgangssystems 5 die Bypass-Einrichtungen jeweils mit ersten und zweiten Bypass-Schaltmitteln nicht für jeden der drei Phasen-Außenleiter L1, L2, L3, sondern nur zweimal benötigt (sogenannte "Sparschaltung"). Im Übrigen arbeiten die über ihre Hauptkontakte E zusammengeführten, mehrstufigen Bypass-Anordnungen entsprechend den obigen Ausführungen zu den Figuren 4 - 5e, wie durch die Verwendung derselben Bezugszeichen zum Ausdruck gebracht.

Zur Wirkungsweise der Schutzanordnung nach Figur 5f wird noch folgendes ausgeführt: Entsteht ein Überlast- oder ein Kurzschlussstrom beispielsweise beim Außenleiter L1 des dreiphasigen Drehstromsystems auf Masse, dann wird dies über den dem Außenleiter L1 zugeordneten Serientransformator 10-1 zur oberen, ersten Überstromschutzeinrichtung 7o gekoppelt, welche ein Durchschalten des zeichnerisch oberen, ersten Kurzschließers 9o auslöst. Dadurch entsteht eine Überbrückung bzw. Umgehung ("Bypass") des zugeordneten Teils bzw. der zugeordneten Leistungshalbleiter des Durchgangssystems 5 über die zugehörigen, ersten und zweiten, kurzgeschlossenen Ausgangspole 5-1, 5-2. Bei einem Kurzschluss des zweiten Außenleiters L2 auf Masse tritt der soeben beschriebene Bypasseffekt über die zeichnerischen unteren Komponenten zweite Überlaststromschutzeinrichtung 7u und zweiter Kurzschließer 9u auf, wobei der Überlast- oder Kurzschlussstrom über den dem Außenleiter L2 zugeordneten Serientransformator 10-2 in den Auslösestromkreis der zweiten, zeichnerisch unteren Bypass-Schalteinrichtung 7u, 9u (als zweite Bypass-Schaltmittel im Sinne der Erfindungsdefinition) eingekoppelt wird. Tritt ein Kurzschlussstrom beim dritten Außenleiter L3 auf Masse auf, erfolgt ein modifizierter Effekt: Über den dem dritten Außenleiter L3 zu geordneten dritten Serientransformator 10-3 wird der Überlast- oder Kurzschlussstrom sowohl zur oberen, ersten Überstromschutzeinrichtung 7o der oberen Bypass-Schalteinrichtung (als zweite Bypass-Schaltmittel im Sinne der Erfindungsdefinition) als auch zur zeichnerischen unteren Überlaststromschutzeinrichtung 7u der unteren, zweiten Bypass-Schalteinrichtung gekoppelt. Es lösen also beide, die obere und die untere Überlaststromschutzeinrichtung 7o, 7u beider Bypass-Schalteinrichtungen 7o, 9o;7u,9u (jeweils als zweite Bypass-Schaltmittel im Sinne der Erfindungsdefinition) aus. Infolgedessen werden beide Kurzschließer 9o, 9u zum Kurzschließen aktiv und das leistungselektronische Durchgangssystem 5 bzw. dessen Leistungshalbleiter werden durch Kurzschließen seiner drei Ausgangspole 5-1,5-2,5-3 vollständig umgangen bzw. vor Überlast- oder Kurzschlussstrom geschützt. Bei einem Kurzschluss des ersten und/oder zweiten Außenleiters L1, L2 hingegen wird nur der erste bzw. nur der zweite Kurzschließer 9o bzw. 9u zum Kurzschließen angesteuert bzw. ausgelöst. Treten Kurzschlüsse zwischen jeweils zwei der drei Außenleiter L1, L2, L3 auf, werden analog zum Fall des Kurzschlusses des dritten Außenleiters L3 auf Masse sowohl der zeichnerisch obere, erste als auch der zeichnerisch untere, zweite Kurzschließer 9o bzw. 9u aktiv bzw. beide Überlaststromschutzeinrichtungen 7o, 7u der beiden zweiten Bypass-Schaltungseinrichtungen lösen den jeweils zugeordneten Kurzschließer 9o, 9u zur Herstellung des Bypass bzw. den (vollständigen) Schutz der Leistungshalbleiter des Durchgangssystems 5 über Kurzschluss aller drei Ausgangspole 5-1, 5-2, 5-3 aus.

In Figur 6 sind Realisierungsmöglichkeiten für die Entlastungseinrichtung 8 dargestellt: Wie von links nach rechts gezeichnet, kann die Entlastungseinrichtung durch einen ohmschen Widerstand R, durch zwei antiparallel geschaltete Dioden, durch einen Diac oder durch eine Schaltungsanordnung mit antiparallel geschalteten Dioden und nachfolgendem Reihenwiderstand realisiert sein

### Bezugszeichenliste

- 1: Externe Überstromschutzeinrichtung
- 2: Erzeuger
- 3: Verbraucher
- 4: Übertragungs- und Verteilnetz
- 4a: dreiphasiges Übertragungs- und Verteilnetz
- 5: Leistungselektronisches Durchgangssystem
- A: eingangsseitiges Potential/Klemme
- B: ausgangsseitiges Potential/Klemme
- M: Elektromotor
- 6: Bypass-Schaltung bzw. erste Bypass-Schaltmittel
- 6a: mechanischer Schaltkontakt
- 6b: TRIAC
- 6c: Auslöseorgan
- 7, 7o, 7u: interne Überstromschutzeinrichtung
- C: Knotenpunkt
- 8: Entlastungseinrichtung
- 9, 9o, 9u: zweites Bypass-Schaltmittel
- X: Überlast oder Kurzschluss
- E, F: Kurzschließer-Hauptkontakte
- D: Ansteuer- bzw. Auslöseklemme
- 9a: Federkraftantrieb
- 9b: Kontaktelement
- 9c: Opferelement/Schmelzröhrchen
- R: ohmscher Widerstand
- 9d: Isolierung
- 9e: Isolierrahmen
- 9f: Gasantrieb mit Zündmechanismus
- 9g: metallischer Bolzen
- 10: Serientransformator bzw. Injektionstransformator
- 10-1: Serientransformator bzw. Injektionstransformator
- 10-2: Serientransformator bzw. Injektionstransformator
- 10-3: Serientransformator bzw. Injektionstransformator
- 5-1: Ausgangspol
- 5-2: Ausgangspol
- 5-3: Ausgangspol
- L1, L2, L3: Außenleiter
- I₁, I₂, I₃: Außenleiterstrom
- U₁₂, U₂₃, U₃₁: Strangspannung

## Patentansprüche

1. Verfahren zum Schutz eines leistungselektronischen Durchgangssystems (5), beispielsweise eines DVR (Dynamic Voltage Restorer), vor Überlastung durch einen fehlerhaften, irregulären und/oder unnormalen Überlast- und/oder Kurzschlussstrom, wobei das Durchgangssystem (5) seriell zwischen wenigstens zwei Elektroenergiesystemen jeweils mit einer oder mehrere Energiequellen (2) und/oder einer oder mehreren Energiesenken (3) eingefügt ist, und im Fall des Überlast- oder Kurzschlussstroms ein oder mehrere erste Bypass-Schaltmittel (6) aktiviert werden, die zum Umgehen und/oder Überbrücken des Durchgangssystems (5), beispielsweise über dessen Eingang (A) und dessen Ausgang (B), ausgebildet und angeordnet sind, **dadurch gekennzeichnet, dass** bei Überschreiten einer vorbestimmten Schwelle für den Überlast- und/oder Kurzschlussstrom ein oder mehrere zweite Bypass-Schaltmittel (9,9o,9u) höherer Strombelastbarkeit und/oder höherer Schaltgeschwindigkeit als diejenigen des oder der ersten Bypass-Schaltmittel (6) aktiviert werden, wobei der Überlast- und/oder Kurzschlussstrom über die geschlossenen, zweiten Bypass-Schaltmittel (9,9o,9u) weiter geführt wird, und das oder die zweiten Bypass-Schaltmittel (9,9o,9u) ebenfalls zum Umgehen und/oder Überbrücken des Durchgangssystems (5), beispielsweise über dessen Eingang und dessen Ausgang, ausgebildet und angeordnet werden.

2. Schutzverfahren nach Anspruch 1, **dadurch gekennzeichnet, dass** als ein oder mehrere, zweite Bypass-Schaltmittel (9,9o,9u) ein oder mehrere, jeweils nicht wiederverwendbare Kurzschließer verwendet werden.

3. Schutzverfahren nach Anspruch 1 oder 2, **dadurch gekennzeichnet, dass** bei Überschreiten der vorbestimmten Schwelle für den Überlast- und/oder Kurzschlussstrom die ein oder mehreren zweiten Bypass-Schaltmittel (9,9o,9u) mittels einer überstromsensitiven Auslöseeinrichtung (7) aktiviert werden, die mit einer oder mehreren, jeweils passiv oder ausschließlich passiv arbeitenden Bauelementen zum Ansprechen auf die vorbestimmte Schwelle ausgelegt und/oder eingestellt ist.

4. Schutzverfahren nach Anspruch 3, **dadurch gekennzeichnet, dass** bei Ansprechen der Auslöseeinrichtung (7) eine Kommutierung von durch das Durchgangssystem (5) und/oder das oder die ersten Bypass-Schaltmittel erfolgendem, elektrischen Stromfluss zu einem (jeweiligen) Ansteuereingang (D) des oder der zweiten Bypass-Schaltmittel (9,9o,9u) und damit eine Stromübernahme auf das oder die zweiten Bypass-Schaltmittel (9,9o,9u) herbeigeführt wird.

5. Schutzverfahren nach einem der vorangehenden Ansprüche, **dadurch gekennzeichnet, dass** das oder die zweiten Bypass-Schaltmittel (9,9o,9u) mittels einer eine Strombeaufschlagung begrenzenden Entlastungseinrichtung (8) vor unzulässiger Erwärmung, Alterung und/oder ungewollter Auslösung bzw. Schalter-Schließung geschützt werden.

6. Schutzverfahren nach einem der vorangehenden Ansprüche, wobei das leistungselektronische Durchgangssystem (5) zur Wirkungsverbindung mit einem dreiphasigen Übertragungs- oder Verteilnetz (4a) oder Drehstromsystem angepasst und eingesetzt wird, **dadurch gekennzeichnet, dass** je ein zweites oder je ein Satz mehrerer zweiter Bypass-Schaltmittel (9o,9u) zur Verbindung und/oder energieübertragenden Kopplung von elektrischen Außenleitern erster und zweiter Phase (L1,L2) und zweiter und dritter Phase (L2,L3) eingesetzt werden, und zur Verbindung und/oder energieübertragenden Kopplung von elektrischen Außenleitern dritter und erster Phase (L3,L1) die genannten zweiten Bypass-Schaltmittel (9o,9u) gemeinsam und/oder gleichzeitig zur Bildung eines gemeinsamen Bypass-Strompfads eingesetzt werden.

7. Schutzverfahren nach einem der vorangehenden Ansprüche, **dadurch gekennzeichnet, dass** die die ersten Bypass-Schaltmittel (6) und das Durchgangssystem (5) überwachende Überstromschutzeinrichtung (7) in ihrer Auslegung und/oder Dimensionierung selektiv auf externe Schutz- bzw. Überlasterkennungseinrichtungen (1) im Übertragungs- und Verteilnetz 4 und/oder auf die Strombelastbarkeit des Durchgangssystems (5) und der ersten Bypass-Schaltmittel (6) abgestimmt werden.

8. Anordnung oder Einrichtung zum Zweck des Schutzes eines leistungselektronischen Durchgangssystems (5), beispielsweise eines DVR (Dynamic Voltage Restorer), vor Überlastung durch einen fehlerhaften, irregulären und/oder unnormalen Überlast- und/oder Kurzschlussstrom, insbesondere geeignet zur Durchführung des Verfahrens nach einem der vorangehenden Ansprüche, welches Durchgangssystem (5) seriell zwischen wenigstens zwei Elektroenergiesystemen jeweils mit einer oder mehrere Energiequellen (2) und/oder einer oder mehreren Energiesenken (3) eingefügt ist, und die genannte Anordnung oder Einrichtung ein oder mehrere erste Bypass-Schaltmittel (6) aufweist, die zum Umgehen und/oder Überbrücken des Durchgangssystems (5), beispielsweise von dessen Eingangsseite (A) zu dessen Ausgangsseite (B), ausgebildet und angeordnet und von einer elektronischen Überlasterkennungseinrichtung aktivierbar (6c) sind, **gekennzeichnet durch** ein oder mehrere zweite Bypass-Schaltmittel (9,9o,9u) höherer Strombelastbarkeit und/oder höherer Schaltgeschwindigkeit als bei dem oder den ersten Bypass-Schaltmitteln (6), wobei das oder die zweiten Bypass-Schaltmittel (9,9o,9u) ebenfalls zum Umgehen und/oder Überbrücken des Durchgangssystems (5), beispielsweise von dessen Eingangsseite (A) zu dessen Ausgangsseite (B), ausgebildet und angeordnet und von wenigstens einer überstromsensitiven Auslöseeinrichtung (7) ansteuerbar sind, die bei Überschreiten einer vorbestimmten Schwelle für den Überlast- und/oder Kurzschlussstrom zu dieser Ansteuerung anspricht.

9. Anordnung oder Einrichtung nach Anspruch 8, **dadurch gekennzeichnet, dass** die überstromsensitive Auslöseeinrichtung eine in Reihe zu dem oder den ersten Bypass-Schaltmitteln (6) angeordnete Überstromschutzeinrichtung (7), beispielsweise Schmelzsicherung oder Leistungsschalter, und einen Auslöse-Strompfad (C-D) umfasst, der von einem zwischen dem oder den ersten Bypass-Schaltmitteln und der Überstromschutzeinrichtung befindlichen Knotenpunkt (C) zu dem oder den zweiten Bypass-Schaltmitteln (9,9o,9u) zu deren Ansteuerung oder Betätigung geführt ist.

10. Anordnung oder Einrichtung nach Anspruch 9, **dadurch gekennzeichnet, dass** an dem Knotenpunkt (C) die Überstromschutzeinrichtung (7) und wenigstens ein zweites Bypass-Schaltmittel (9,9o,9u) parallel angelegt sind.

11. Anordnung oder Einrichtung nach Anspruch 9 oder 10, **dadurch gekennzeichnet, dass** das oder die zweiten Bypass-Schaltmittel (9,9o,9u) als nicht wiederverwendbare Kurzschließer jeweils mit Opferelement (9c) und/oder Gasgenerator (9f) oder pyrotechnischem Antrieb jeweils mit Zündeinrichtung ausgeführt sind, welches Opferelement (9c) oder welcher Gasgenerator (9f) bzw. pyrotechnischer Antrieb mit dem Auslöse-Strompfad (C-D) verbunden sind.

12. Anordnung oder Einrichtung nach Anspruch 9, 10 oder 11, **gekennzeichnet durch** ein oder mehrere, beispielsweise zueinander parallel geschaltete, in den Auslöse-Strompfad (C-D) eingefügte Entlastungselemente, beispielsweise ausgeführt mit einem oder mehreren ohmschen Widerständen oder mit einem oder mehreren Diacs bzw. Zweirichtungsdiode(n), wobei das oder die Entlastungselemente (8) mit dem jeweiligen Ansteuereingang (D), beispielsweise Opferelement (9c) oder Gasgenerator (9f) oder pyrotechnischem Antrieb, des oder der zweiten Bypass-Schaltmittel (9,9o,9u) verbunden sind.

13. Anordnung oder Einrichtung nach Anspruch 12, wobei der jeweilige Ansteuereingang des oder der zweiten Bypass-Schaltmittel (9,9o,9u) zweipolig und von dessen oder deren Schaltkontakten (9b) elektrisch isoliert oder galvanisch getrennt ausgeführt ist, und die beiden Pole des Ansteuereingangs mit je einem Pol der Überstromschutzeinrichtung (7) gekoppelt sind, **dadurch gekennzeichnet, dass** zwischen den Polen der Überstromschutzeinrichtung (7) und des Ansteuereingangs (D) zu deren Kopplung je ein oder mehrere Entlastungselemente eingefügt sind.

14. Anordnung oder Einrichtung nach einem der vorangehenden Ansprüche, **dadurch gekennzeichnet, dass** das eine oder die mehreren zweiten Bypass-Schaltmittel (9,9o,9u) elektrisch parallel zu einer Reihenschaltung angeordnet sind, die aus dem oder den ersten Bypass-Schaltmitteln (6) und der Überstromschutzeinrichtung (7) gebildet ist.

15. Anordnung oder Einrichtung nach einem der vorangehenden Ansprüche, wobei das leistungselektronische Durchgangssystem (5) zur Wirkungsverbindung mit einem dreiphasigen Übertragungs- und Verteilnetz (4a) oder Drehstromsystem ausgebildet ist, **dadurch gekennzeichnet, dass** je ein zweites oder je ein Satz mehrerer zweiter Bypass-Schaltmittel (9o,9u) zur Verbindung und/oder energieübertragender Kopplung von elektrischen Außenleitern erster und zweiter Phase (L1,L2) und zweiter und dritter Phase (L2,L3) angeordnet sind, und über eine Reihenschaltung der genannten zweiten Bypass-Schaltmittel (9o,9u) die elektrischen Außenleiter dritter und erster Phase (L3,L1) verbunden und/oder energieübertragend gekoppelt sind.

16. Anordnung oder Einrichtung nach Anspruch 15, **dadurch gekennzeichnet, dass** wenigstens das zweite Bypass-Schaltmittel (9o) zur Verbindung und/oder energieübertragenden Kopplung von elektrischen Außenleitern erster und zweiter Phase (L1,L2) und das weitere zweite Bypass-Schaltmittel (9u) zur Verbindung und/oder energieübertragender Kopplung von elektrischen Außenleitern zweiter und dritter Phase (L2,L3) zur Realisierung der Reihenschaltung über je eine (E) ihrer jeweiligen Kontaktelektroden (E,F) miteinander verbunden sind.

17. Anordnung oder Einrichtung nach Anspruch 16, **dadurch gekennzeichnet, dass** die jeweils andere (F) der Kontaktelektroden (E,F) der beiden zweiten Bypass-Schaltmittel (9o,9u) mit je einem Anschlusspol eines seriell in das dreiphasige Übertragungs- und Verteilnetz (4a) eingefügten Serientransformators oder Injektionstransformators (10-3) verbunden ist, der einem DVR als leistungselektronisches Durchgangssystem (5) zugeordnet ist.
